# EUROPEAN PATENT APPLICATION

(11) **EP 2 717 247 A2**
(43) Date of publication of application: **09.04.2014**
(21) Application number: 13183495.4
(22) Date of filing: 09.09.2013
(51) Int. Cl.: G09G 3/00

(54) **Image processing apparatus and method for performing image rendering based on orientation of display**

(30) Priority: 05.10.2012 KR 20120110704
(71) Applicant: Samsung Electronics Co., Ltd, Gyeonggi-do 443-742 (KR)
(72) Inventor: Park, Ju Yong, 446-712 Gyeonggi-do (KR); Kim, Chang Yeong, 446-712 Gyeonggi-do (KR); Nam, Dong Kyung, 446-712 Gyeonggi-do (KR); Park, Du Sik, 446-712 Gyeonggi-do (KR)
(74) Representative: Grootscholten, Johannes A.M.

(57) **Abstract**

An apparatus and method for rendering an image considering an orientation of a display according t the invention includes a display mode determination unit to determining an expression mode of a display based on spatial information corresponding to eyes of a user, and an image rendering unit to render an image corresponding to the eye of the user based on the expression mode of the display.

## Description

### BACKGROUND

### 1. Field

The following description relates to an image processing apparatus and method, and more particularly, to an apparatus and method for performing image rendering based on an orientation of a display.

### 2. Description of the Related Art

To implement a 3-dimensional (3D) image, a difference between images seen by a left eye and a right eye of a user may be used. Conventionally, it has been suggested for a method of implementing a 3D image for when the user watches content displayed through a horizontal display. However, according to downsizing of the display as in a mobile display or monitor and various configurations of the display, the user may watch content displayed in not only the horizontal direction, but also a vertical direction. That is, the user may rotate the display by 90° as desired to watch the content horizontally or vertically.
In a case where the horizontal display is capable of providing only a disparity image, a 3D image may not be normally implemented when the horizontal display is rotated to a vertical orientation.

Accordingly, there is a need for a method for providing a disparity image seen to the left eye and the right eye of the user more accurately when a display is rotated to a horizontal orientation or to a vertical orientation.

### SUMMARY

The foregoing and/or other aspects are achieved by providing an image processing apparatus including a display mode determination unit to determine an expression mode of a display, which expression mode indicates a rotational state of the display based on spatial information corresponding to at least one of the eyes of a user; and an image rendering unit to render an image corresponding to the eye of the user based on the expression mode of the display.

The display mode determination unit may determine whether the display operates in any one expression mode between a vertical orientation and a horizontal orientation corresponding to directions or positions of the eyes the user.

The display mode determination unit may determine the expression mode of the display using an angle at which a direction vector based on a left eye and a right eye of the user is projected to the display.

The image rendering unit may determine a pixel value of a sub pixel of the display to implement different images to the left eye and/or the right eye of the user based on the expression mode of the display.

The image rendering unit may render the image corresponding to the eye of the user by converting an orientation of an optical element connected with the display.

The foregoing and/or other aspects are achieved by providing an image processing apparatus including an eye information collection unit to collect eye information including information on eyes of a user watching content implemented on a display; and an optical element control unit to control an optical element connected with the display using the eye information.

The optical element control unit may determine whether the display operates in any one expression mode between a vertical orientation and a horizontal orientation based on positions or directions of eyes included in the eye information of the user, and converts an orientation of the optical element connected with the display based on the expression mode.

The foregoing and/or other aspects are achieved by providing an image processing apparatus including an eye information collection unit to collect eye information including information on eyes of a user watching content implemented on a display; a visibility information extraction unit to extract visibility information for rendering of the content based on the eye information; and an image rendering unit to render an image corresponding to the eye information of the user using the visibility information.

The visibility information extraction unit may determine an orientation of an optical element connected with the display according to the eye information of the user, and extract visibility information using the orientation of the optical element.

The foregoing and/or other aspects are achieved by providing a method of processing an image including determining an expression mode of a display based on spatial information corresponding to eyes of a user, and rendering an image corresponding to the eye of the user based on the expression mode of the display.

The foregoing and/or other aspects are achieved by providing a method of processing an image including collecting eye information comprising information on eyes of a user watching content implemented on a display, extracting visibility information for rendering of the content based on the eye information, and rendering an image corresponding to the eye information of the user using the visibility information.

The foregoing and/or other aspects are achieved by providing a non-transitory computer-readable recording medium storing a program to implement the method of processing an image.

Additional aspects, features, and/or advantages of example embodiments will be set forth in part in the description which follows and, in part, will be apparent from the description, or may be learned by practice of the disclosure.

### BRIEF DESCRIPTION OF THE DRAWINGS

These and/or other aspects and advantages will become apparent and more readily appreciated from the following description of the example embodiments, taken in conjunction with the accompanying drawings of which:
FIG. 1 illustrates an image processing apparatus according to example embodiments;
FIG. 2 illustrates an image processing apparatus according to example embodiments;
FIG. 3 illustrates an image processing apparatus according to example embodiments;
FIG. 4 illustrates a light field display according to example embodiments;
FIG. 5 illustrates an example of converting an orientation of a parallax barrier with respect to a display in a horizontal orientation, according to example embodiments;
FIG. 6 illustrates an example of converting an orientation of a parallax barrier with respect to a display in a vertical orientation, according to example embodiments;
FIG. 7 illustrates an example of converting an orientation of a lenticular lens with respect to a display in a horizontal orientation, according to example embodiments;
FIG. 8 illustrates an example of converting an orientation of a lenticular lens with respect to a display in a vertical orientation, according to example embodiments;
FIG. 9 illustrates an example of converting an image display orientation with respect to a lenticular lens slanted with respect to a display in a horizontal orientation, according to example embodiments;
FIG. 10 illustrates an example of converting an image display orientation with respect to a lenticular lens slanted with respect to a display in a vertical orientation, according to example embodiments;
FIG. 11 illustrates an example of converting an image display orientation with respect to a parallax barrier slanted with respect to a display in a horizontal orientation, according to example embodiments;
FIG. 12 illustrates an example of converting an image display orientation with respect to a parallax barrier slanted with respect to a display in a vertical orientation, according to example embodiments;
FIG. 13 illustrates a process of detecting information on eyes using a camera, according to example embodiments; and
FIG. 14 illustrates a process of determining a horizontal orientation or vertical orientation of the display using eye information, according to example embodiments.

### DETAILED DESCRIPTION

Reference will now be made in detail to example embodiments, examples of which are illustrated in the accompanying drawings, wherein like reference numerals refer to like elements throughout. Example embodiments are described below to explain the present disclosure by referring to the figures. An image processing apparatus according to the example embodiments may be included in a PC or a TV, for example, equipped with a display, and may control the display.

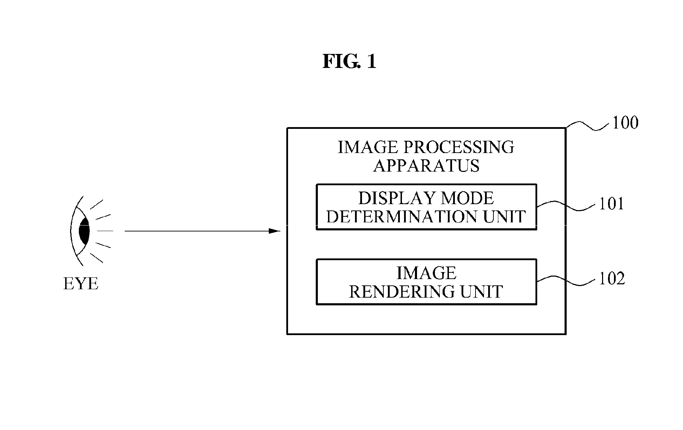

FIG. 1 illustrates an image processing apparatus 100 according to example embodiments.

Referring to FIG. 1, the image processing apparatus 100 may include a display mode determination unit 101 and an image rendering unit 102.

The display mode determination unit 101 may determine an expression mode of a display based on spatial information corresponding to eyes of a user. Here, the spatial information may refer to data on a 3-dimensional (3D) space of a left eye and/or a right eye of the user. The display mode determination unit 101 may determine whether the display operates in a vertical orientation expression mode or a horizontal orientation expression mode corresponding to directions or positions of the eyes of the user. Accordingly, the display may be rotated to a horizontal position or a vertical position with respect to the user according to a user operation. The display mode determination unit 101 may determine the expression mode of the display, which indicates a rotated state of the display, using the directions or positions of the eyes of the user.

The image rendering unit 102 may render an image corresponding to the eye of the user based on the expression mode of the display. The image rendering unit 102 may determine a pixel value of a sub pixel of the display so that different images may be implemented to a left eye and a right eye of the user based on the expression mode of the display.

For example, the image rendering unit 102 may determine visibility information according to watching angles with respect to the display, based on the expression mode. Therefore, the image rendering unit 102 may determine the pixel value of the sub pixel of the display using the visibility information according to watching angles.

For example, the image rendering unit 102 may render the image corresponding to the eye of the user, by converting an orientation of an optical element connected with the display. In the example embodiments, the display may implement a 3D image by a glasses-free method. For example, the display may enable the image expressed to the left eye and the right eye of the user to be seen in a particular space, using an optical element such as a parallax barrier or a lenticular lens, for example. The image rendering unit 102 may convert the orientation of the optical element according to the expression mode of the display.

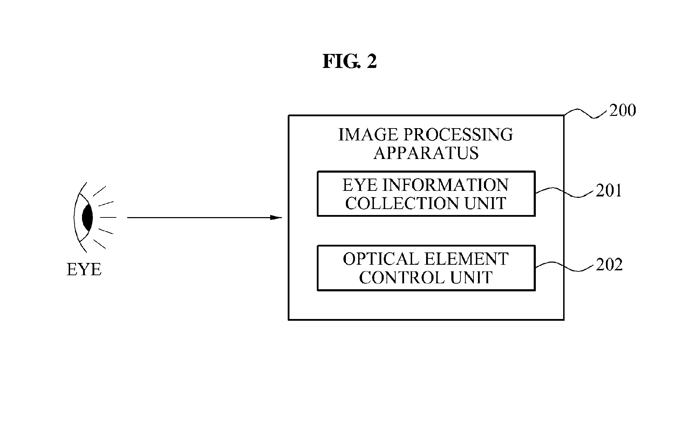

FIG. 2 illustrates an image processing apparatus 200 according to example embodiments.

Referring to FIG. 2, the image processing apparatus 200 may include an eye information collection unit 201 and an optical element control unit 202.

The eye information collection unit 201 may collect eye information of a user watching content implemented on a display. Here, the eye information of the user may include positions or directions of a left eye and a right eye of the user in a 3D space. The eye information of the user may be collected using a sensor included in the display.

The optical element control unit 202 may control an optical element connected with the display using the eye information. As aforementioned, when the display is capable of implementing a 3D image by the glasses-free method, the optical element may include a parallax barrier, a lenticular lens, and the like.

For example, the optical element control unit 202 may determine whether the display operates in any one expression mode between a vertical orientation and a horizontal orientation based on positions or directions of eyes included in the eye information. In addition, based on the expression mode, the optical element control unit 202 may convert an orientation of the optical element connected with the display. When the orientation of the optical element is converted, visibility information set to the optical element may also be changed. Therefore, the display may determine a pixel value of a sub pixel of the display according to the changed visibility information.

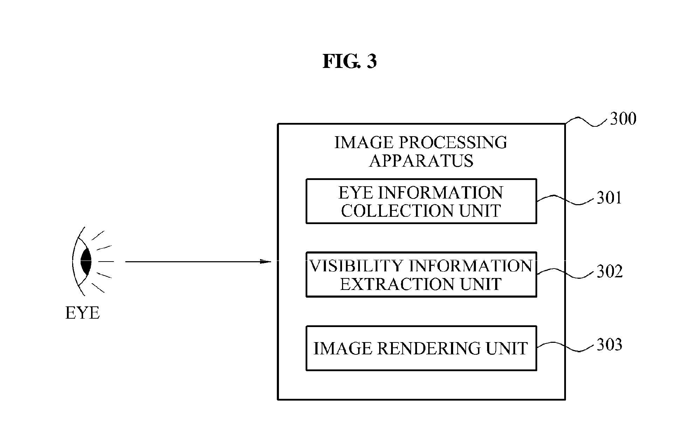

FIG. 3 illustrates an image processing apparatus 300 according to example embodiments.

Referring to FIG. 3, the image processing apparatus 300 may include an eye information collection unit 301, a visibility information extraction unit 302, and an image rendering unit 303.

The eye information collection unit 301 may collect eye information of a user watching content implemented on a display. The eye information of the user may include positions and directions of a left eye and a right eye of the user on a 3D space.

The visibility information extraction unit 302 may extract visibility information for rendering the content, based on the eye information. For example, the visibility information extraction unit 302 may determine an orientation of an optical element connected with the display according to the eye information of the user. Here, the optical element may be slanted by a predetermined angle. In addition, the visibility information extraction unit 302 may extract the visibility information using the orientation of the optical element.

The image rendering unit 303 may render an image corresponding to the eye information of the user using the visibility information.

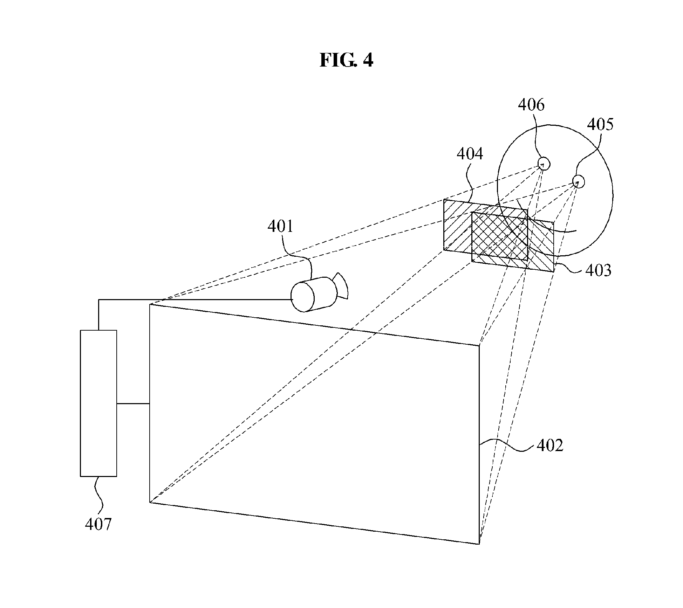

FIG. 4 illustrates a light field display according to example embodiments.

In the example embodiments, an image processing apparatus 407 may detect positions or directions of a left eye 405 and a right eye 406 of a user watching content implemented through a display 402 in a 3D space. Therefore, the image processing apparatus 407 may determine an orientation of the display 402 with reference to the user according to the positions or the directions of the left eye 405 and the right eye 406 of the user. The image processing apparatus 407 may perform rendering of an image 403 corresponding to the left eye 405 and an image 404 corresponding to the right eye 406 although the display 402 is rotated by approximately 90° to a horizontal orientation or a vertical orientation. That is, the image processing apparatus 407 may implement a 3D image irrespective of the vertical orientation or the horizontal orientation of the display 402, thereby enabling the user to watch a high quality 3D image.

The image processing apparatus 407 may detect the positions or the directions of the left eye 405 and the right eye 406 of the user by a sensor 401. The display 402 according to the example embodiments may display different images to the left eye 405 and the right eye 406, respectively, using a parallax barrier, a lenticular lens, or the like. The parallax barrier or the lenticular lens may be slanted by a predetermined angle in the display 402. In addition, the parallax barrier or the lenticular lens may be converted to a vertical orientation or a horizontal orientation.

In relation to a sub pixel of the display 402, watching directions of the left eye 405 and the right eye 406 of the user and brightness values corresponding to the watching directions are determined. Accordingly, visibility information may be generated in advance, the visibility information of which brightness is normalized according to primary colors, that is, red (R), green (G), and blue (B), using the brightness values based on the watching directions.

The image processing apparatus 407 may determine an expression mode of the display 402, indicating whether the display 402 is in any one orientation of the display 402 between a vertical orientation and a horizontal orientation, according to the positions or the directions of the left eye 405 and the right eye 406. In addition, the image processing apparatus 407 may calculate combination of signals of a sub pixel for clearly showing different images to the left eye 405 and the right eye 406 of the user, using the visibility information generated in advance according to the expression mode of the display 402.

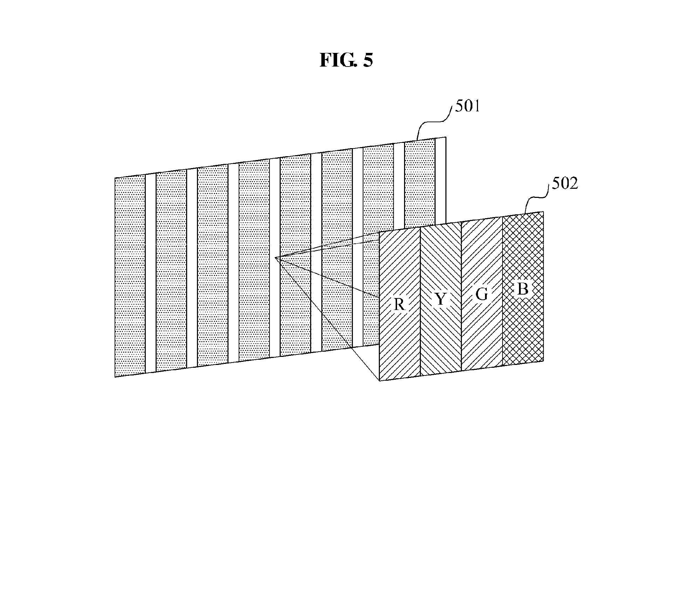

FIG. 5 illustrates an example of converting an orientation of a parallax barrier 501 with respect to a display 502 in a horizontal orientation, according to example embodiments.

Referring to FIG. 5, when an expression mode of a display 502 is a horizontal orientation, an image processing apparatus may convert the orientation of the parallax barrier 501 to a horizontal orientation. As aforementioned, the expression mode of the display 502 may be determined according to positions or directions of a left eye and a right eye of a user. The image processing apparatus may perform rendering of a 3D image corresponding to the eye of the user, by converting the orientation of the parallax barrier 501 according to the expression mode of the display 502.

Here, the image processing apparatus may determine a pixel value of a sub pixel included in the display 502 using visibility information corresponding to the parallax barrier 501 converted to the horizontal orientation. The visibility information corresponding to the parallax barrier 501 may be changed depending on the orientation of the parallax barrier 501.

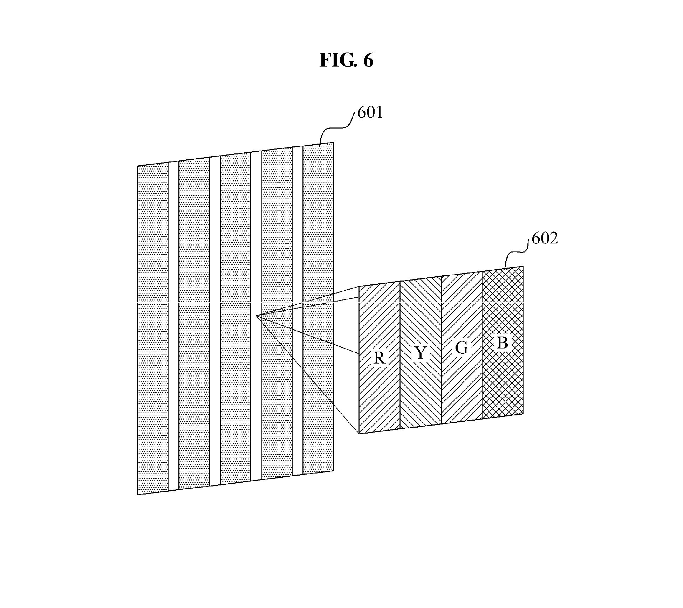

FIG. 6 illustrates an example of converting an orientation of a parallax barrier 601 with respect to a display 602 in a vertical orientation, according to example embodiments.

Referring to FIG. 6, when an expression mode of the display 602 is a vertical orientation, an image processing apparatus may convert the orientation of the parallax barrier 601 to a vertical orientation. As aforementioned, the expression mode of the display 602 may be determined according to positions or directions of a left eye and a right eye of a user. The image processing apparatus may perform rendering of a 3D image corresponding to the eye of the user, by converting the orientation of the parallax barrier 601 according to the expression mode of the display 602.

Here, the image processing apparatus may determine a pixel value of a sub pixel included in the display 602 using visibility information corresponding to the parallax barrier 601 converted to the vertical orientation. The visibility information corresponding to the parallax barrier 601 may be changed depending on the orientation of the parallax barrier 601.

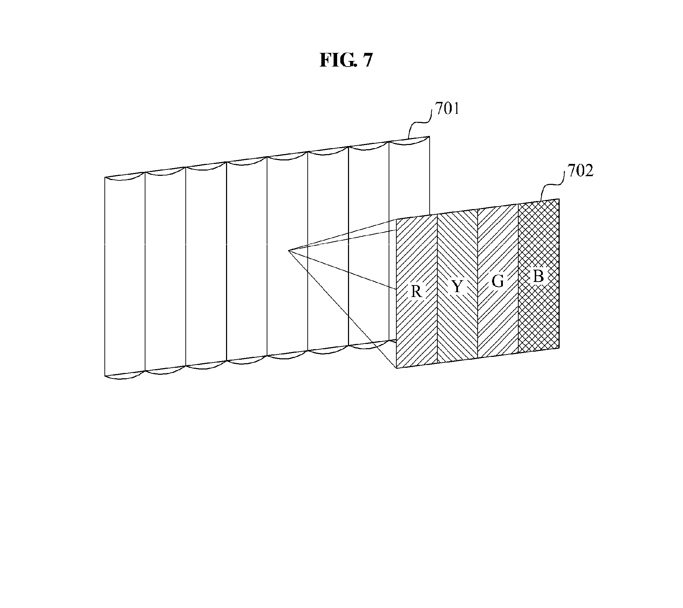

FIG. 7 illustrates an example of converting an orientation of a lenticular lens 701 with respect to a display 702 in a horizontal orientation, according to example embodiments.

Referring to FIG. 7, when an expression mode of the display 702 is a horizontal orientation, an image processing apparatus may convert the orientation of the lenticular lens 701 to a horizontal orientation. As aforementioned, the expression mode of the display 702 may be determined according to positions or directions of a left eye and a right eye of a user. The image processing apparatus may perform rendering of a 3D image corresponding to the eye of the user, by converting the orientation of the lenticular lens 701 according to the expression mode of the display 702.

Here, the image processing apparatus may determine a pixel value of a sub pixel included in the display 702 using visibility information corresponding to the lenticular lens 701 converted to the horizontal orientation. The visibility information corresponding to the lenticular lens 701 may be changed depending on the orientation of the lenticular lens 701.

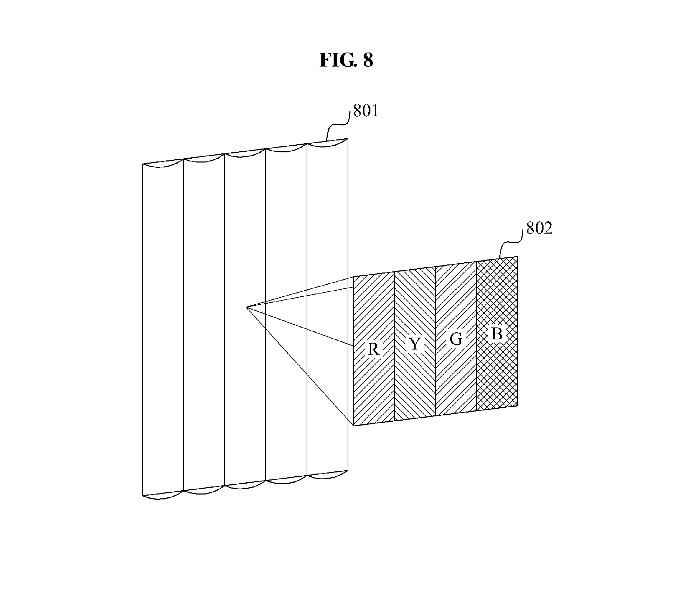

FIG. 8 illustrates an example of converting an orientation of a lenticular lens 801 with respect to a display 802 in a vertical orientation, according to example embodiments.

Referring to FIG. 8, when an expression mode of the display 802 is a vertical orientation, an image processing apparatus may convert the orientation of the lenticular lens 801 to a vertical orientation. As aforementioned, the expression mode of the display 802 may be determined according to positions or directions of a left eye and a right eye of a user. The image processing apparatus may perform rendering of a 3D image corresponding to the eye of the user, by converting the orientation of the lenticular lens 801 according to the expression mode of the display 802.

Here, the image processing apparatus may determine a pixel value of a sub pixel included in the display 802 using visibility information corresponding to the lenticular lens 801 converted to the vertical orientation. The visibility information corresponding to the lenticular lens 801 may be changed depending on the orientation of the lenticular lens 801.

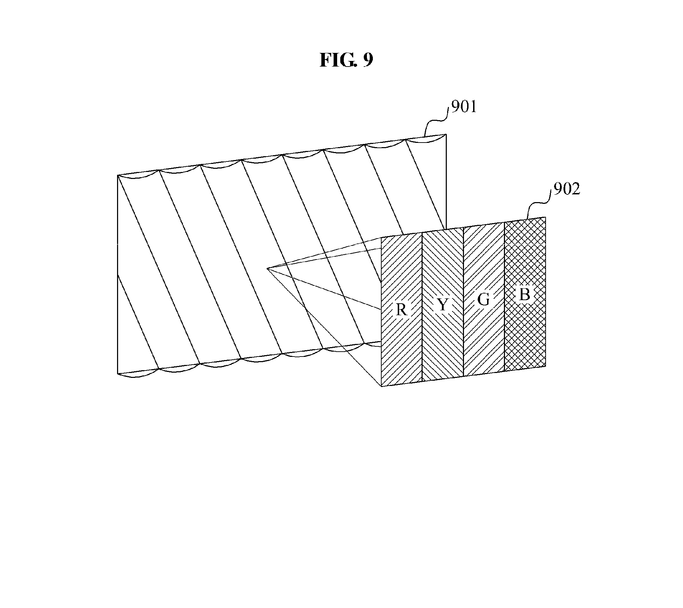

FIG. 9 illustrates an example of converting an image display orientation with respect to a lenticular lens 901 slanted with respect to a display 902 in a horizontal orientation, according to example embodiments.

In the embodiments of FIG. 9, the display 902 is displayed in a horizontal orientation with reference to a user. As shown in FIG. 9, the lenticular lens 901 may be slanted by a predetermined angle. In the same manner as in FIG. 7, the image processing apparatus may extract visibility information related to the lenticular lens 901 according to an expression mode of the display 902.

As aforementioned, the expression mode of the display 902 is the horizontal orientation. The slanted lenticular lens 901 may have different visibility information depending on whether an observation position of the user corresponds to the horizontal orientation or the vertical orientation. Therefore, the image processing apparatus may render a 3D image corresponding to positions or directions of a left eye and a right eye of the user based on the extracted visibility information.

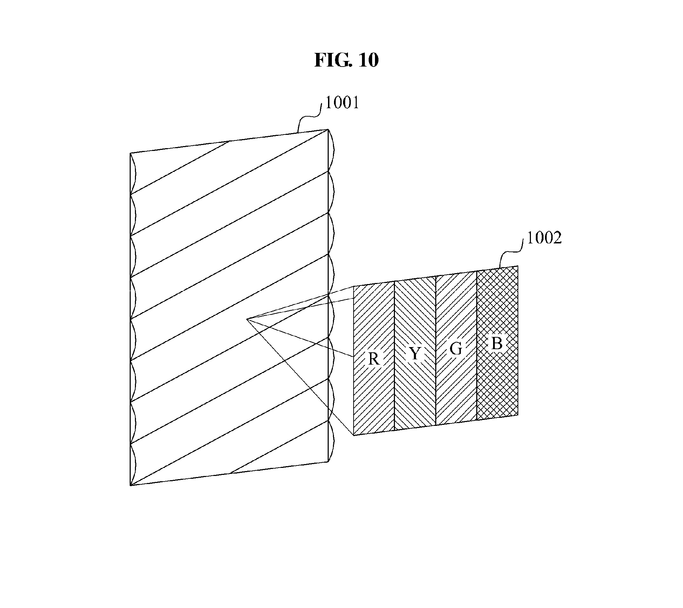

FIG. 10 illustrates an example of converting an image display orientation with respect to a lenticular lens 1001 slanted with respect to a display 1002 in a vertical orientation, according to example embodiments.

In the embodiments of FIG. 10, the display 1002 is displayed in a vertical orientation with reference to a user. As shown in FIG. 10, the lenticular lens 1001 may be slanted by a predetermined angle. In the same manner as in FIG. 8, the image processing apparatus may extract visibility information related to the lenticular lens 1001 according to an expression mode of the display 1002.

As aforementioned, the expression mode of the display 1002 is the vertical orientation. The slanted lenticular lens 1001 may have different visibility information depending on whether an observation position of the user is the horizontal orientation or the vertical orientation. Therefore, the image processing apparatus may render a 3D image corresponding to positions or directions of a left eye and a right eye of the user based on the extracted visibility information.

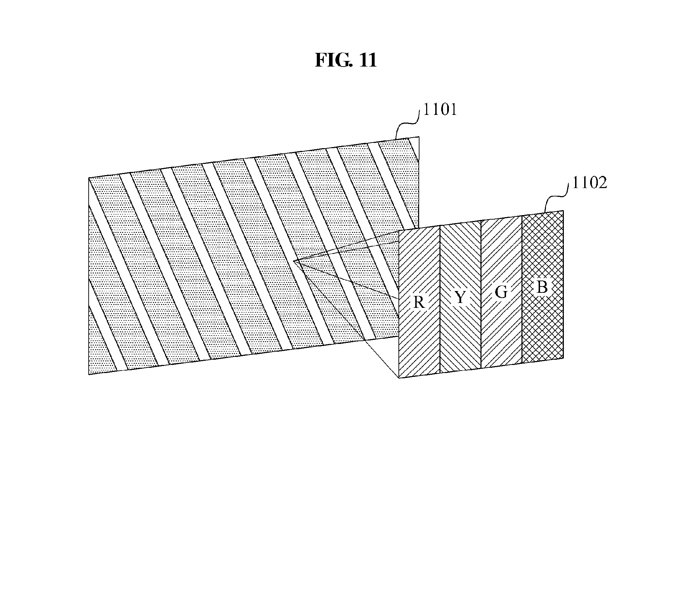

FIG. 11 illustrates an example of converting an image display orientation with respect to a parallax barrier 1101 slanted with respect to a display 1102 in a horizontal orientation, according to example embodiments.

In the embodiments of FIG. 11, the display 1002 is displayed in a horizontal orientation with reference to a user. As shown in FIG. 11, the parallax barrier 1101 may be slanted by a predetermined angle. In the same manner as in FIG. 5, the image processing apparatus may extract visibility information related to the parallax barrier 1101 according to an expression mode of the display 1102.

As aforementioned, the expression mode of the display 1102 is the horizontal orientation. The slanted parallax barrier 1101 may have different visibility information depending on whether an observation position of the user is the horizontal orientation or the vertical orientation. Therefore, the image processing apparatus may render a 3D image corresponding to positions or directions of a left eye and a right eye of the user based on the extracted visibility information.

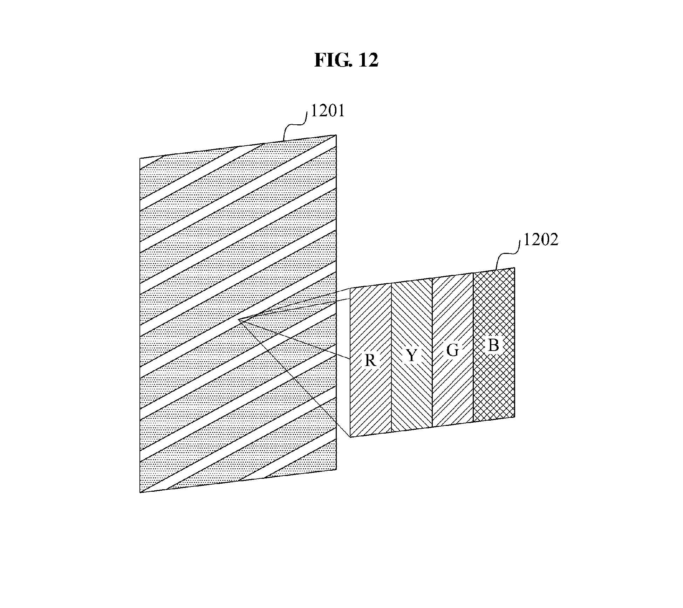

FIG. 12 illustrates an example of converting an image display orientation with respect to a parallax barrier 1201 slanted with respect to a display 1202 in a vertical orientation, according to example embodiments.

In the embodiments of FIG. 12, the display 1002 is displayed in a vertical orientation with reference to a user. As shown in FIG. 12, the parallax barrier 1201 may be slanted by a predetermined angle. In the same manner as in FIG. 6, the image processing apparatus may extract visibility information related to the parallax barrier 1201 according to an expression mode of the display 1202.

As aforementioned, the expression mode of the display 1202 is the vertical orientation. The slanted parallax barrier 1201 may have different visibility information depending on whether an observation position of the user is the horizontal orientation or the vertical orientation. Therefore, the image processing apparatus may render a 3D image corresponding to positions or directions of a left eye and a right eye of the user based on the extracted visibility information.

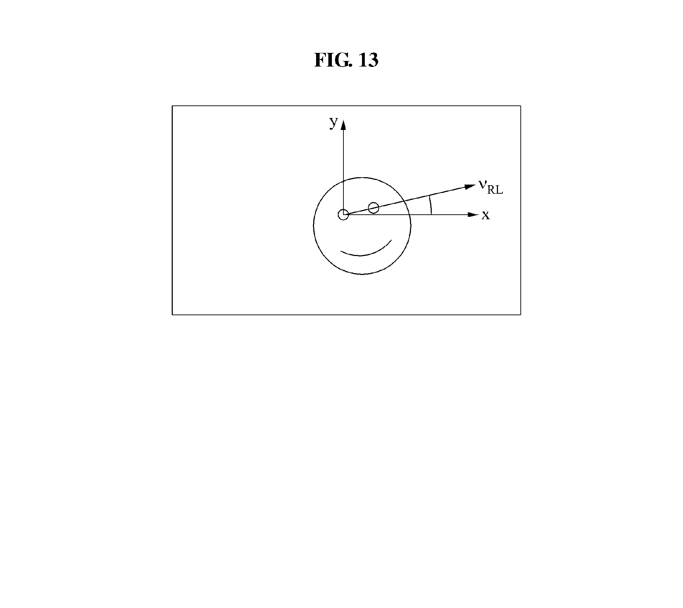

FIG. 13 illustrates a process of detecting information on eyes using a camera, according to example embodiments.

In detail, FIG. 13 shows a process of detecting positions or directions of a left eye and a right eye of a user watching content implemented on a display, using the camera. Based on the detected positions or directions of at least one of the left eye and the right eye, an expression mode of the display, such as a horizontal orientation or a vertical orientation relative to the at least one of the left eye and the right eye of the user, may be determined.

An image processing apparatus may calculate a direction vector V_{RL} of a direction from the right eye to the left eye, using an eye coordinate detected from an image captured by the camera. Then, the image processing apparatus may determine the expression mode of the display indicating whether the display is in the vertical orientation or the horizontal orientation, using an angle formed by the direction vector V_{RL} and an x-axis or y-axis.

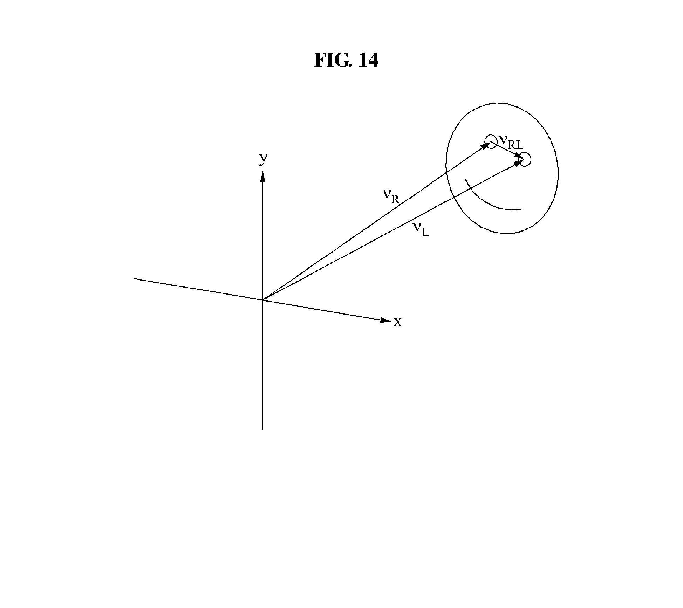

FIG. 14 illustrates a process of determining a horizontal orientation or a vertical orientation of a display using eye information, according to example embodiments.

That is, FIG. 14 shows a process of determining the horizontal orientation or the vertical orientation of the display using positions or directions of a left eye and a right eye of a user located on a 3D space. In detail, the image processing apparatus may calculate the direction vector V_{RL} of the direction from the right eye to the left eye, using a 3D coordinate of the left eye and the right eye. When the direction vector V_{RL} is projected to a surface parallel to a display surface, the image processing apparatus may determine an expression mode of the display indicating whether the display is in the vertical orientation or the horizontal orientation, using an angle formed by the projected direction vector V_{RL} and an x-axis or y-axis of the display surface.

When the display is disposed in the horizontal orientation or the vertical orientation with respect to two eyes of the user, the image processing apparatus may detect the two eyes of the user and change an optical element of the display according to the expression mode of the display. When the optical element connected with the display is slanted, the image processing apparatus may provide a proper image with respect to the two eyes using different visibility information according to a slanting direction. Finally, the image processing apparatus may provide a clear 3D image to the two eyes of the user irrespective of whether the display is in the horizontal orientation or the vertical orientation.

According to the example embodiments, a multi-view or 1D light field display is used, which applies an optical element such as a lenticular lens or a parallax barrier capable of rotation of approximately 90°. Alternatively, a multi-view or 1D light field display may be used, which is capable of implementing an image of a horizontal or vertical view by including a slanted optical element. In such a display, when a relative horizontal or vertical direction between the display and the eyes is changed, the image processing apparatus may provide an image of a proper view to the left eye and the right eye of the user, coping with the change of direction.

In detail, the image processing apparatus may implement a desired image with respect to the left eye and the right eye by detecting positions or directions of the left eye and the right eye of the user. For this purpose, the image processing apparatus may determine whether the display is implementing content in a horizontal orientation or a vertical orientation. When the expression mode of the display is determined, the image processing apparatus may measure a pixel value of a sub pixel constituting the display in advance according to the expression mode.

During this, the image processing apparatus may properly control the pixel value of sub pixels, not influential to the left eye and the right eye, to a low value or to zero, thereby considerably reducing crosstalk components. In addition, the image processing apparatus may implement content corresponding to the positions or directions of the left eye and the right eye in real time, so that a 3D image may be implemented without distortion to the user located in any position.

When the display includes an optical element such as a lens or a barrier, a watching region of the user may be secured while preventing reduction of resolution using auxiliary regions repeated adjacent to a main region, due to characteristics of the optical element. In addition, a natural parallax feel may be achieved in every direction including front, rear, right, and left directions. When the user watches content having a vertical length in a display having a horizontal length, because an orientation of the display implementing a 3D image is limited, inefficiency in that only a part of the display is used or only a part of the 3D image is implemented may be prevented. That is, use efficiency of the display may be increased.

The methods according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. The media may be transfer media such as optical lines, metal lines, or waveguides including a carrier wave for transmitting a signal designating the program command and the data construction. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Although example embodiments have been shown and described, it would be appreciated by those skilled in the art that changes may be made in these example embodiments without departing from the principles of the present disclosure and the invention disclosed herein, where the scope of protection for the invention is defined in the claims, which may include alternatives and equivalents for specifically disclosed embodiments of the invention or elements components and features thereof. For instance the present invention is equally applicable for larger television displays to detect when a user / viewer has laid down to adapt the manner in which the content, for instance 3D content, is displayed to the user / viewer with his or her head tilted and for instance laid down on a pillow in bed or on a couch.

## Claims

1. An image processing apparatus, comprising:
a display mode determination unit arranged to determine an expression mode of a display, which expression mode indicates a rotational state of the display based on spatial information relative to at least one eye of a user; and
an image rendering unit arranged to render an image corresponding to the eye of the user, based on the expression mode of the display.

2. The image processing apparatus of claim 1, wherein the display mode determination unit is arranged to determine whether the display operates in a vertical orientation expression mode or a horizontal orientation expression mode corresponding to a direction or position of the eye the user.

3. The image processing apparatus of claim 1 or 2, wherein the display mode determination unit is arranged to determine the expression mode of the display using an angle at which a direction vector based on a left eye and a right eye of the user is projected to the display.

4. The image processing apparatus one of claims 1 to 3,
wherein the image rendering unit is arranged to determine a pixel value of a sub pixel of the display to implement different images to the left eye and the right eye of the user, based on the expression mode of the display.

5. The image processing apparatus of one of claims 1 to 4, wherein the image rendering unit is arranged to render the image corresponding to the eye of the user by converting an orientation of an optical element connected with the display.

6. The image processing apparatus of one of claims 1 to 5, wherein the image rendering unit is arranged to determine visibility information according to watching angles with respect to the display, based on the expression mode

7. The image processing apparatus of one of claims 1 to 6, wherein the display is arranged to implement a 3D image using a parallax barrier or a lenticular lens.

8. The image processing apparatus of one of claims 1 to 7, wherein the image rendering unit is arranged to render the image corresponding to the eye of the user by converting an orientation of a parallax barrier, based on the expression mode of the display.

9. The image processing apparatus of one of claims 1 to 8,
wherein the display mode determination unit comprises an eye information collection unit arranged to collect eye information comprising information on eyes of a user watching content implemented on a display.

10. The image processing apparatus of one of claims 1 to 9, wherein the image rendering unit comprises an optical element control unit arranged to control an optical element connected with the display corresponding to the eye of the user.

11. The image processing apparatus of claim 10, wherein the optical element control unit is arranged to determine whether the display operates in a vertical orientation expression mode or a horizontal orientation expression mode, based on positions or directions of eyes included in the eye information of the user.

12. The image processing apparatus of claim 10 or 11,
wherein the optical element control unit is arranged to convert an orientation of the optical element connected with the display, based on the expression mode.

13. The image processing apparatus of one of claims 10 to 12, wherein the optical element comprises at least one optical element from the group comprising a parallax barrier, and a lenticular lens.

14. An image processing method, comprising:
determining a display mode to determine an expression mode of a display, which expression mode indicates a rotational state of the display based on spatial information relative to at least one eye of a user; and
rendering an image to render the image corresponding to the eye of the user, based on the expression mode of the display.

15. A computer program to, when executed on at least a processor, implement the method according to claim 14.
